(19) Europäisches Patentamt / European Patent Office / Office européen des brevets

(11) **EP 3 793 762 B1**

(12) **EUROPÄISCHE PATENTSCHRIFT**

(45) Veröffentlichungstag und Bekanntmachung des Hinweises auf die Patenterteilung:
**26.01.2022 Patentblatt 2022/04**

(21) Anmeldenummer: **19728584.4**

(22) Anmeldetag: **21.05.2019**

(51) Internationale Patentklassifikation (IPC):
**B23K 20/12** *(2006.01)* **F01L 3/14** *(2006.01)*

(52) Gemeinsame Patentklassifikation (CPC):
**B23K 20/12; B23K 20/129; F01L 3/14;**
F01L 2303/00

(86) Internationale Anmeldenummer:
**PCT/EP2019/063054**

(87) Internationale Veröffentlichungsnummer:
**WO 2020/052818 (19.03.2020 Gazette 2020/12)**

(54) **VERFAHREN ZUR HERSTELLUNG EINES GESCHWEISSTEN HOHLRAUMVENTILS**

METHOD FOR PRODUCING A WELDED CAVITY VALVE

PROCÉDÉ DE FABRICATION D'UNE VANNE À ESPACE VIDE SOUDÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2018 DE 102018122441**

(43) Veröffentlichungstag der Anmeldung:
**24.03.2021 Patentblatt 2021/12**

(73) Patentinhaber: **Federal-Mogul Valvetrain GmbH 30890 Barsinghausen (DE)**

(72) Erfinder:
• **MATTHIAS, Thorsten 30826 Garbsen (DE)**
• **WOLKING, Antonius 30890 Barsinghausen (DE)**

(74) Vertreter: **Kurig, Thomas Becker & Kurig Partnerschaft Patentanwälte PartmbB Bavariastrasse 7 80336 München (DE)**

(56) Entgegenhaltungen:
EP-A2- 1 213 087    DE-A1-102007 026 328
DE-A1-102008 034 930    DE-A1-102015 220 891

## Beschreibung

### Gebiet der Erfindung

Die vorliegende Erfindung betrifft Hohlraumventile bei denen der Hohlraum am Ventilteller durch Anschweißen eines Ventilbodens geschlossen wird.

### Stand der Technik

Ventile (bzw. Tellerventile) von Brennkraftmaschinen, insbesondere Auslassventile, werden im Betrieb thermisch hoch beansprucht. So können im Bereich des Übergangs vom Ventilteller in den Ventilschaft Temperaturen von über 800°C auftreten, wodurch die Festigkeit des Ventilwerkstoffes erheblich reduziert wird. Einlassventile erreichen Temperaturen von ca. 300°C bis 550°C, Auslassventile können über 900°C heiß werden. Durch den Einsatz von natriumgekühlten Ventilen, d.h. Hohlraumventilen in deren Hohlraum sich Natrium als Kühlmedium befindet (sogenannte Shaker-Kühlung), kann die Temperatur der Ventile um bis zu 150°C reduziert werden. Ein vergrößerter Hohlraum, der sich nicht nur entlang einer Bohrung im Ventilschaft erstreckt, sondern sich auch radial über die Bohrung hinaus in den Ventilteller erstreckt, führt zu einer stärkeren Kühlung und auch zu einer Reduzierung des Gewichtes.

Ein Verfahren zur Herstellung eines Hohlraumventils besteht darin, zunächst einen Ventilkörper herzustellen, dann von der Ventilbodenseite ausgehend den Hohlraum einzubringen (z.B. durch Bohren oder Fräsen) und anschließend den Hohlraum am Ventilteller zu verschließen, indem ein Deckel, d.h. ein Ventilboden, mit dem Ventilkörper verschweißt wird, ein Kühlmedium (Natrium) kann gegebenenfalls vor dem Schweißen in den Hohlraum eingefüllt werden. Vorteil dieses Verfahrens gegenüber umformtechnisch hergestellten Hohlraumventilen ist eine höhere Variabilität des Hohlraums, d.h. durch das nachträgliche Verschweißen des Ventils mit einem Deckel besteht die Möglichkeit, die Geometrie des Hohlraumes flexibler zu gestalten.

Üblicherweise wird das Verschweißen von Hohlraumventilen durch einfache Verfahren, wie z.B. Laserschweißen oder Reibschweißen, vorgenommen; vgl. z.B. DE 10209770 A1. Diese Verfahren unterliegen jedoch Beschränkungen in ihrer Anwendbarkeit. Beispielsweise müssen beim Laserschweißen Schweißstoß und Laserfokus exakt positioniert werden, was teure Führungselemente bedingt, beim Lichtbogenschweißen sind nur geringe Schweißgeschwindigkeiten möglich und es entstehen hohe Einbrandtiefen, d.h. große Wärmeeinflusszonen, was zu Verzug und einer Beeinflussung der Materialeigenschaften führt, und beim Reibscheißen kommt es zur Bildung großer Schweißwülste, was eine Nachbearbeitung nötig macht, die im Hohlraum, d.h. im Inneren des Ventils jedoch nicht möglich ist, so dass die dortige Schweißwulst stehen bleibt und die Kühlung negativ beeinflusst.

DE 102015220891 A1 offenbart ein Verfahren zur Herstellung eines Hohlventils, wobei der Ventilkörper durch Walzen geformt wird und der Ventildeckel insbesondere durch Reibschweißen mit dem Ventilkörper verbunden werden kann. EP 1213087 A2 offenbart ein Verfahren zum Verbinden eines aus einer Ti-Legierung bestehenden Vollschafts mit einem aus einer TiAl intermetallischen Verbindung bestehenden Ventilkopfs mittels Reibschweißen, wobei der Ventilkopf, dessen Material eine höhere Temperaturfestigkeit aufweist, induktiv erwärmt wird. DE 102007026328 A1 betrifft ein Verfahren zum stoffschlüssigen Verbinden zweier hochwarmfester Bauteile aus Materialien, die sich bei unterschiedlich hohen Temperaturen verformen, mittels Reibschweißen, wobei das Bauteil, das sich erst bei einer höheren Temperatur verformt, induktiv erwärmt wird. DE 102008034930 A1 betrifft ein Fügeverfahren zum Verbinden zweier Bauteile, von denen eines einen einkristallinen oder gerichtet erstarrten Werkstoff aufweist, mittels Reibschweißen, wobei an einer vorgesehenen Fügefläche eine polykristalline Schicht durch Einbringen von Verformungs- oder Verzerrungsenergie in eine dünne oberflächennahe Schicht und eine anschließende Wärmebehandlung (induktives Erwärmen) erzeugt wird.

Entsprechend ist es Ziel der vorliegenden Erfindung, eine Schweißverbindung zwischen Deckel (d.h. dem Ventilboden) und dem Ventilkörper (d.h. Hohlventil ohne Ventilboden) bereitzustellen, bei der nur eine schmale Wärmeeinflusszone erzeugt wird und Schweißwülste möglichst klein gehalten werden.

### Zusammenfassung der Erfindung

Das Problem wird erfindungsgemäß gelöst durch ein Verfahren zur Herstellung eines Hohlraumventils gemäß dem Anspruch 1. Abhängige Ansprüche betreffen bevorzugte Ausführungsformen.

Das Verfahren zur Herstellung eines Hohlraumventils umfasst Bereitstellen eines Ventilkörpers, der einen Hohlraum im Inneren aufweist, wobei der Ventilkörper an einer Bodenseite eine kreisförmige Öffnung mit einer Öffnungsrandfläche aufweist, Bereitstellen eines kreisförmigen Ventildeckels mit einer Deckelrandfläche, Induktives Erwärmen der Öffnungsrandfläche und der Deckelrandfläche und Verschweißen des Ventilkörpers mit dem Ventildeckel durch Reibschweißen der Öffnungsrandfläche mit der Deckelrandfläche.

Gemäß einem weiteren Aspekt kann das induktive Erwärmen von Öffnungsrandfläche und/oder Deckelrandfläche bis auf eine Temperatur oberhalb der Rekristallisationstemperatur eines Materials von Ventilkörper bzw. Ventildeckel erfolgen.

Gemäß einem weiteren Aspekt kann das Verfahren weiterhin induktives Zuführen von Energie mittels einer Induktionsheizung nach dem Schritt des Verschweißens umfassen, um eine Abkühlgeschwindigkeit zu steuern.

Gemäß einem weiteren Aspekt kann das Verfahren weiterhin Nachbearbeiten einer Ventilbodenfläche des verschweißten Hohlraumventils.

Gemäß einem weiteren Aspekt kann das Verfahren Bewegen von Ventilkörper und Ventildeckel aufeinander zu, nach und/oder während dem induktiven Erwärmen, bis die Öffnungsrandfläche und die Deckelrandfläche in Kontakt stehen, Drehen des Ventilkörpers und des Ventildeckels relativ zueinander für einen vorbestimmten Reibschweiß-Zeitraum, wobei Öffnungsrandfläche und Deckelrandfläche mit einem ersten Druck aneinander gepresst werden, und Aneinanderpressen der Öffnungsrandfläche und der Deckelrandfläche mit einem zweiten Druck nach Beenden des Drehens für einen vorbestimmten Kühl-Zeitraum umfassen.

Gemäß einem weiteren Aspekt kann das Verschweißen unter einem Schutzgas erfolgen.

Gemäß einem weiteren Aspekt kann das Verfahren weiterhin Rotieren des Ventilkörpers bzw. des Ventildeckels relativ zu einem Induktionsheizelement während des induktiven Erwärmens umfassen.

Gemäß einem weiteren Aspekt kann das induktive Erwärmen mittels einer Induktionsheizung erfolgen, deren Frequenz mindestens 10 kHz beträgt.

Gemäß einem weiteren Aspekt kann das induktive Erwärmen direkt an der Öffnungsrandfläche und/oder der Deckelrandfläche erfolgen, wobei mindestens 50% der jeweiligen Wärmeenergie in einer Oberflächenschicht unter der Öffnungsrandfläche bzw. der Deckelrandfläche erzeugt wird.

Gemäß einem weiteren Aspekt kann die Oberflächenschicht unter der Öffnungsrandfläche bzw. der Deckelrandfläche eine Dicke kleiner als 0,5 mm aufweisen.

Gemäß einem weiteren Aspekt kann das Verfahren induktives Erwärmen der Öffnungsrandfläche umfassen, wobei das induktive Aufheizen mittels eines Induktionsheizelements erfolgt, das in den Hohlraum hineinragt.

Gemäß einem weiteren Aspekt kann das Verfahren weiterhin Einfüllen eines Kühlmediums in den Hohlraum oder einen Ventilstammhohlraum vor dem Verschweißen umfassen.

Gemäß einem weiteren Aspekt können Ventilkörper und Ventildeckel aus unterschiedlichen Materialien bestehen.

Statt des Begriffes 'Hohlraumventil' werden in dieser Beschreibung auch die Begriffe 'Hohltellerventil', 'Hohlventil' oder einfach , Ventil' verwendet.

## Kurze Beschreibung der Zeichnung

Im Folgenden werden beispielhafte Ausführungsformen der Erfindung unter Bezug auf die Figuren genauer beschrieben, wobei

    Figur 1 einen Teller eines Hohltellerventils, bei dem der Ventildeckel gemäß dem Stand der Technik mittels Reibschweißen mit dem Ventilkörper verschweißt wurde, zeigt;
    Figuren 2A bis 2D Herstellungsschritte gemäß der vorliegenden Erfindung in Schnittdarstellungen zeigen;
    Figur 3 eine alternative Ausführung des induktiven Aufwärmens in einer Schnittdarstellung zeigt;
    Figur 4 einen weiteren optionalen Schritt des erfindungsgemäßen Verfahrens zeigt;
    Figuren 5A und 5B alternative Ausführungen des induktiven Aufwärmens der Öffnungsrandfläche in Schnittdarstellungen zeigen; und
    Figur 6 eine alternative Ausführung des induktiven Aufwärmens der Deckrandfläche zeigt.

Sowohl in der Beschreibung als auch in der Zeichnung werden gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht notwendigerweise die tatsächlichen Größenverhältnisse dar.

## Ausführliche Beschreibung der Erfindung

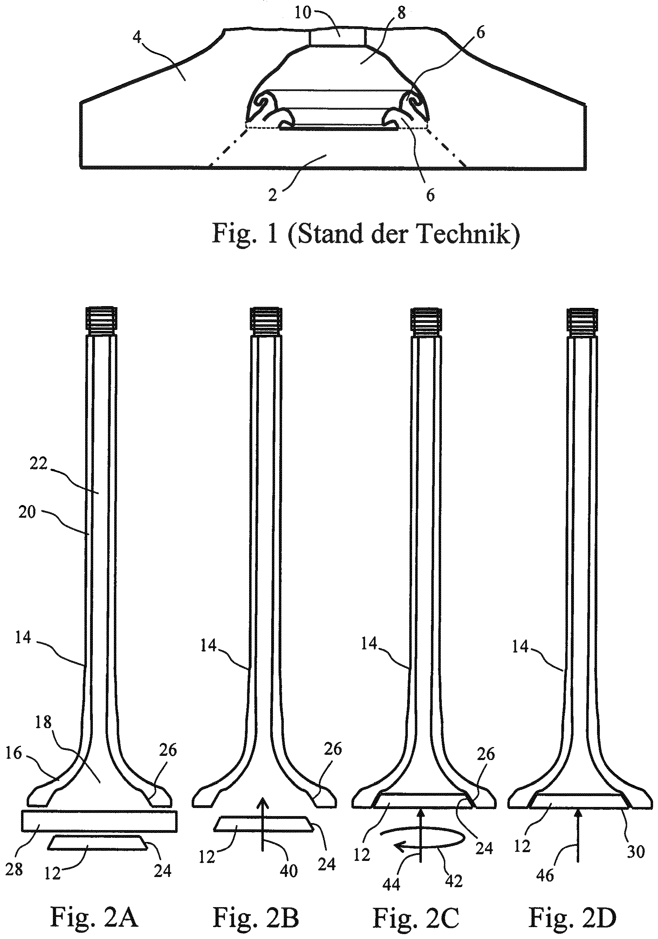

In Fig. 1 ist ein Teller eines Hohltellerventils des Standes der Technik in einer Schnittansicht dargestellt, bei dem der Ventildeckel 2 mittels Reibschweißen mit dem Ventilkörper 4 verschweißt wurde. Die Bodenfläche des Ventils (die im eingebauten Zustand des Ventils dem Brennraum zugewandt ist) liegt in der Figur unten. Beim Reibschweißen werden Ventildeckel 2 und Ventilkörper 4 gegeneinander gepresst und gleichzeitig relativ zueinander gedreht bzw. rotiert, wobei es durch die dabei auftretende Reibungswärme zu einer Plastifizierung des Materials kommt. Die Relativrotation wird dann beendet, wobei anschließend, während das Material abkühlt, Ventildeckel und Ventilkörper noch für eine gewisse Zeit gegeneinander gepresst werden, bis sich das Material wieder verfestigt und der Schweißvorgang abgeschlossen ist. Die Stoßfläche zwischen Ventildeckel 2 und Ventilkörper 4, an der die Schweißnaht verläuft, ist durch eine Strich-Punkt-Linie dargestellt. Beim Reibschweißen entstehen relativ große Schweißwülste 6, die die in der Figur skizzierte typische Form aufweisen. Diese Schweißwülste 6 nehmen einen erheblichen Teil des Hohlraums 8 im Ventilkopf ein, wodurch die Kühlwirkung mittels eines Kühlmediums (z.B. Natrium) beeinträchtigt wird. Zum Vergleich ist in der Figur die eigentliche, idealisierte Form des Hohlraums 8 mit einer Strichlinie angedeutet. In Fig. 1 ist weiter eine Bohrung 10 durch einen nicht weiter dargestellten Ventilschaft zu erkennen. Die Bodenfläche des Ventils wurde bereits nachbearbeitet, so dass dortige Schweißwülste bzw. Schweißrückstände entfernt wurden.

In den Figuren 2A bis 2D sind verschiedene Verfahrensschritte gemäß der vorliegenden Erfindung in Schnittdarstellungen dargestellt. Hierbei zeigt Fig. 2A ein induktives Erwärmen, Fig. 2B einen Zwischenschritt und Fig. 2C und Fig. 2D zeigen zusammengenommen einen Verschweiß-Schritt mittels Reibschweißen.

Das Verfahren beginnt mit dem nicht dargestellten Bereitstellen zweier Bauteile, nämlich dem Bereitstellen eines Ventilkörpers bzw. Ventilkörper-Rohlings und dem Bereitstellen eines Ventildeckels bzw. Ventildeckel-Rohlings. Der Ventilkörper 14 umfasst einen Ventilteller bzw. Ventilkopf 16 mit einem Hohlraum 18 (vereinfacht gesagt befindet sich der Hohlraum 18 im Ventilkörper 14) und einen Ventilstamm 20, in dem sich ein Ventilstamm-Hohlraum 22 befindet, der mit dem Hohlraum 18 im Ventilkopf 16 verbunden ist. Der Ventilkörper 14 ist im Allgemeinen rotationssymmetrisch um eine Ventilachse, die durch den Ventilstamm 20 definiert ist. Der Hohlraum 18 im Ventilkopf 16 erstreckt sich bis zu einer Bodenseite des Ventilkörpers 14, so dass dieser an der Bodenseite eine Öffnung aufweist, welche kreisförmig ist und eine rotationssymmetrische Öffnungsrandfläche 26 definiert. Als Bodenseite wird hier diejenige Seite des Ventils bezeichnet, die im in einen Verbrennungsmotor eingebauten Zustand dem Brennraum zugewandt ist. Der Ventildeckel 12 ist, in einer Aufsicht, ebenfalls kreisförmig und weist an seinem Umfang eine rotationssymmetrische Deckelrandfläche 24 auf, d.h. der Ventildeckel ist plattenförmig ausgeführt und ist rotationssymmetrisch um eine Rotationsachse; ein Durchmesser des Ventildeckels kann in Richtung der Rotationsachse variieren. Öffnungsrandfläche 26 und Deckelrandfläche 24 sind zu einander korrespondierend gestaltet, d.h. sie weisen im Wesentlichen die gleiche Form und Größe auf, so dass sie aneinander gelegt werden können, um so den Hohlraum 18 im Ventilkopf 16 schließen. Bevorzugt sind die Öffnungsrandfläche 26 und die Deckelrandfläche 24 konisch.

Ventilkörper 14 und Ventildeckel 12 können durch dem Fachmann bekannte Verfahren hergestellt werden. Der Ventilkörper 14 kann z.B. zunächst als Körper ohne Hohlraum geschmiedet und anschließend können der Hohlraum 18 und der Ventilstamm-Hohlraum 22 durch Bohren oder Fräsen von der Bodenseite aus eingebracht werden. Andere mögliche Verfahren zur Herstellung des Ventilkörpers 14 sind z.B. Ziehen oder Stauchen bzw. Strecken.

Nach dem Bereitstellen von Ventilkörper 14 und Ventildeckel 12 werden beide,

Öffnungsrandfläche 26 und Deckelrandfläche 24, induktiv erwärmt. Dies ist in einem Ausführungsbeispiel in Fig. 2A dargestellt. Das induktive Erwärmen erfolgt durch eine Induktionsheizung, wobei in Fig. 2A ein beispielsweise plattenförmiges Induktionsheizelement 28 zwischen Ventilkörper 14 und Ventildeckel 12 platziert wird; weitere Teile der Induktionsheizung, wie etwa Stromversorgung und Stromzufuhrkabel, sind nicht dargestellt. Mittels des Induktionsheizelements 28 wird ein elektromagnetisches Wechselfeld erzeugt, das zu Induktionsströmen im Material des Ventilkörpers 14 bzw. des Ventildeckels 12 führt, welche wiederum aufgrund des elektrischen Widerstands des Materials zu einer Erwärmung desselben führen, auch tragen Ummagnetisierungsverluste zur Erwärmung bei. Im gezeichneten Beispiel umfasst das Induktionsheizelement 28 z.B. Windungen eines elektrischen Leiters, die um eine Achse verlaufen, die zur Ventilachse parallel ist, insbesondere mit dieser zusammen fällt, so dass ober- und unterhalb (also sowohl auf der Seite des Ventilkörpers, als auch auf der Seite des Ventildeckels 12) des Induktionsheizelements 28 ein elektromagnetisches Wechselfeld erzeugt werden kann. Diese Windungen sind dann über Zufuhrkabel mit der Stromversorgung verbunden, die einen Wechselstrom liefert. Durch diese Anordnung wird der Ventildeckel 12 als Ganzes und eine bodenseitig gelegener Abschnitt des Ventilkörpers 14 erwärmt, so dass also die Deckelrandfläche 24 und die Öffnungsrandfläche 26 auch erwärmt werden. In der Zeichnung erstreckt sich das plattenförmige Induktionsheizelement 28 über die gesamte radiale (‚radial' soll hier auf die Ventilachse bzw. auf die Radialrichtung des kreisförmigen Ventildeckels bezogen sein) Ausdehnung von Ventilkörper 14 und Ventildeckel 12. Alternativ hierzu ist es auch möglich ein kleineres plattenförmiges Induktionsheizelement zu verwenden, das lediglich Teilbereiche von Ventilkörper 14 und Ventildeckel 12 abdeckt, in denen sich Teile der Deckelrandfläche 24 bzw. der Öffnungsrandfläche 26 befinden. In diesem Fall sollten Ventilkörper 14 und Ventildeckel 12 relativ zum Induktionsheizelement rotiert werden; vgl. weiter unten. Selbstverständlich können auch mehrere kleinere Induktionsheizelemente über den Umfang verteilt verwendet werden.

Vorzugsweise erfolgt das induktive Erwärmen bis eine Rekristallisationstemperatur des Materials des Ventilkörpers 14 bzw. eine Rekristallisationstemperatur des Materials des Ventildeckels 12 überschritten wird.

In Fig. 2B ist der nachfolgende Schritt (nach dem induktiven Erwärmen) eines Aufeinanderzu-Bewegens des Ventilköpers 14 und des Ventildeckels 12 dargestellt. Vorzugsweise wird nur eines der beiden Bauelemente bewegt, insbesondere wird bevorzugt nur der Ventildeckel 12 bewegt, wie in der Figur durch einen Pfeil 40 angedeutet. Dieses Bewegen wird solange durchgeführt bis Öffnungsrandfläche 26 und Deckelrandfläche 24 in Kontakt stehen.

Nachfolgend, vgl. Fig. 2C, werden Ventilkörper 14 und Ventildeckel 12 relativ zu einander gedreht bzw. rotiert, wobei vorzugsweise nur eines der beiden Bauelemente rotiert wird, insbesondere der Ventildeckel 12. Gleichzeitig werden Ventilkörper 14 und Ventildeckel 12 gegeneinander gedrückt, so dass Öffnungsrandfläche 26 und Deckelrandfläche 24 mit einem vorbestimmten ersten Druck gegeneinander gepresst werden. Bevorzugt ist der Ventilkörper 14 fest eingespannt und der Ventildeckel 12 wird rotiert und gegen den Ventilkörper gedrückt; dies ist in der Figur durch einen Pfeil 42 (Rotieren) und einen Pfeil 44 (Drücken) angedeutet. Durch das Rotieren der miteinander in Kontakt stehenden Öffnungsrandfläche 26 und Deckelrandfläche 24 relativ zueinander, entsteht Reibungswärme die zur Plastifizierung der Materialien von Ventilkörper 14 und Ventildeckel 12 an der Stoßfläche bzw. den Kontaktflächen (Öffnungsrandfläche 26 und Deckelrandfläche 24) führt. Entsprechend werden die Rotation und das Drücken, um den ersten Druck zu erzeugen, über einen vorbestimmten Reibschweiß-Zeitraum durchgeführt bis ausreichend viel Reibungswärme entstanden ist.

Um den Reibschweißvorgang abzuschließen, wird anschließend die Rotation beendet und werden Ventilkörper 14 und Ventildeckel 12 weiterhin gegeneinander gedrückt, so dass Öffnungsrandfläche 26 und Deckelrandfläche 24 mit einem vorbestimmten zweiten Druck gegeneinander gepresst werden. Dieser Druck wird über einen vorbestimmten Kühl-Zeitraum aufrechterhalten, während dem sich das plastifizierte Material wieder verfestigt und so eine Reibscheißverbindung zwischen Ventilkörper 14 und Ventildeckel 12 hergestellt wird.

Bevorzugt erfolgt der Schweißvorgang, insbesondere das Reibschweißen, unter einem Schutzgas, d.h. einem inerten Gas, wie z.B. Argon, Helium oder Stickstoff. Ein geeignetes Kühlmedium (Natrium) kann vor dem Verschweißen in den Hohlraum 18 oder den Ventilstammhohlraum 22 gefüllt werden.

Vorteil dieses Verfahrens gegenüber dem aus dem Stand der Technik bekannten Verfahren ist, dass ein Großteil der zum Verschweißen benötigten (Wärme-)Energie durch das induktive Erwärmen zugeführt wird und lediglich ein kleinerer Anteil der Energie beim Reibschweißen durch Reibung der zu verschweißenden Flächen erzeugt wird. Dadurch wird beim Reibschweißen weniger Material verschoben, so dass kleinere Schweißwülste entstehen, die den Hohlraum weniger stark verkleinern und die Kühlung weniger beeinträchtigen. Ebenso wird das induktive Erwärmen nur bis zu einer Temperatur durchgeführt, die für sich genommen noch nicht zu Verscheißen ausreicht, d.h. die Wärmeeinflusszonen können relativ klein gehalten werden. Weiter kann die anteilige (Ventilkörper einerseits, Ventildeckel andererseits) Wärmeeinbringung gesteuert werden, was die Verwendung unterschiedlich großer Querschnitte oder unterschiedlicher Materialien bzw. Werkstoffe ermöglicht. Beispielsweise kann der Durchmesser des Ventildeckels etwas größer als der Öffnungsdurchmesser sein, wobei dann der Ventilkörper beim induktiven Erwärmen stärker erwärmt wird (auf eine höhere Temperatur gebracht wird) und er sich stärker ausdehnt als der Ventildeckel, so dass der Ventildeckel in die Öffnung hineinpasst und das Reibschweißen durchgeführt werden kann; beim Abkühlen wird dann eine Art Schrumpfpassung hergestellt.

Optional kann eine Ventilbodenfläche 30 an der Bodenseite des Ventils nachbearbeitet werden, um Schweißwülste und Schweißrückstände an der Außenseite des Ventils zu beseitigen.

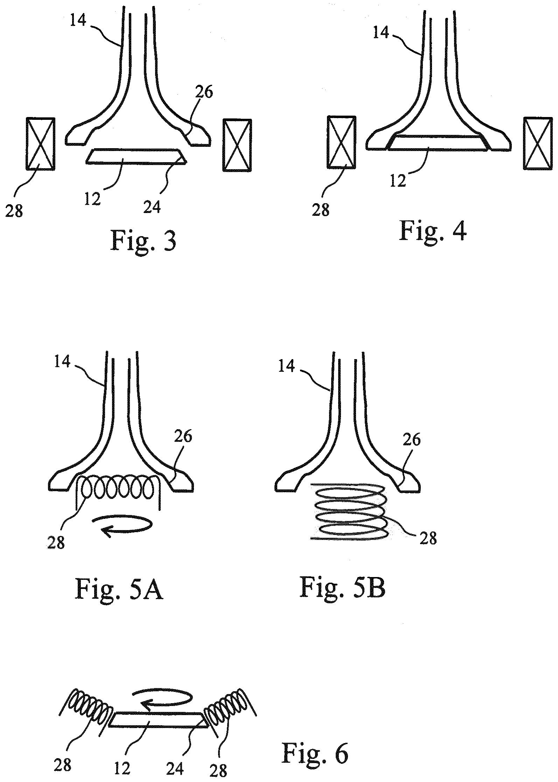

Fig. 3 stellt eine alternative Ausführung des induktiven Erwärmens dar. Hier ist das Induktionsheizelement 28 nicht plattenförmig wie in der Ausführung nach Fig. 2A, sondern ringförmig ausgeführt. D.h. das Induktionsheizelement 28 der Induktionsheizung umfasst eine Spule, die um den zu erwärmenden bodenseitigen Abschnitt des Ventilkörpers 14 und den Ventildeckel 12, der vom Ventilkörper noch beabstandet ist, angeordnet ist. Fließt ein Wechselstrom durch die Spule, wird ein elektromagnetisches Wechselfeld erzeugt, dessen Magnetfeldlinien im Bereich des zu erwärmenden Abschnitts des Ventilkörpers 14 und des Ventildeckels 12 parallel zur Ventilachse verlaufen.

Hier wurde beispielsweise nur ein Induktionsheizelement bzw. nur eine Spule beschrieben, selbstverständlich können auch mehrere Spulen (Induktionsheizelemente), etwa eine zum Erwärmen der Öffnungsrandfläche 26 und eine zum Erwärmen der Deckelrandfläche, verwendet werden. Auch ist eine Kombination eines plattenförmigen Heizelements und eines ringförmigen Heizelements denkbar. Allgemeiner können statt einem einzelnen Induktionsheizelement mehrere Induktionsheizelemente verwendet werden; ‚ein Induktionsheizelement' ist also im Rahmen dieser Anmeldung als ‚mindestens eine Induktionsheizelement' zu verstehen.

Das Verfahren kann weiter ein Rotieren des Ventilkörpers 14 und/oder des Ventildeckels 12 relativ zu dem Induktionsheizelement 28 während des induktiven Erwärmens umfassen, wobei bevorzugt der Ventilkörper 14 und/oder der Ventildeckel 12 rotiert werden und das Induktionsheizelement 28 feststeht. So wird ein gleichmäßiges Erwärmen in Umfangrichtung erreicht, wenn z.B. aufgrund der Anordnung des Induktionsheizelements bzw. eines in Umfangrichtung nicht symmetrischen elektromagnetischen Feldes die induktive Erwärmung nicht gleichmäßig über den gesamten Umfang erfolgt.

Optional kann auch nach dem Verschweißen von Ventilkörper 14 und Ventildeckel 12 Energie mittels einer Induktionsheizung zugeführt werden. Dadurch kann eine Abkühlgeschwindigkeit des verschweißten Ventils gesteuert werden, etwa um Spannungen zu vermeiden oder die Maximalhärte zu verringern. In Fig. 4 ist hierzu die (Wärme-)Energiezufuhr mittels eines ringförmigen Induktionsheizelements 28 (wie in Fig. 3) dargestellt, das so platziert ist, dass es ein elektromagnetisches Wechselfeld im Bereich der Schweißstelle erzeugen kann. Selbstverständlich kann hier auch ein plattenförmiges Induktionsheizelement (wie in Fig. 2A) verwendet werden, das dann bodenseitig des Ventils angeordnet wird.

Bevorzugt erfolgt das induktive Erwärmen mit einer (Hochfrequenz-)Induktionsheizung, die mit einer Frequenz von mindestens 10 kHz (Kilohertz), vorzugsweise mindestens 15 kHz, weiter bevorzugt mindestens 20 kHz, betrieben wird. Entsprechend liegt die Betriebsfrequenz bevorzugt im Bereich von 10 kHz bis 50 kHz, vorzugweise im Bereich von 20 kHz bis 30 kHz. Aufgrund des sogenannten Skin-Effekts nimmt die induzierte Stromdichte im Inneren eines Leiters mit dem Abstand von der Oberfläche des Leiters schnell ab. Diese Abnahme erfolgt - abhängig von der Form des Leiters und der Form des elektromagnetischen Feldes - typischerweise exponentiell. Als Maß hierfür wird die Eindringtiefe verwendet, welche die Tiefe bezeichnet, bei der die Stromdichte auf 1/e der Stromdichte direkt an der Oberfläche abgefallen ist. Die Eindringtiefe nimmt mit $1/\sqrt{f}$ ab, wobei $f$ die Frequenz des elektromagnetischen Feldes bezeichnet. Bei einer Frequenz von 10 kHz ist die Eindringtiefe für Stähle typischerweise bereits kleiner als 0,5 mm, für viele Stähle kleiner oder gleich etwa 0,1mm. Ist die Frequenz entsprechend hoch, wird die zum Erwärmen notwendige Energie also innerhalb einer dünnen Oberflächenschicht eingebracht. Dies ermöglicht es, die zu verschweißenden Werkstücke gezielt an den zu verschweißenden Flächen zu erwärmen, so dass die anderen Bereiche der Werkstücke lediglich indirekt durch Wärmeleitung erwärmt werden.

Bevorzugt erfolgt das induktive Erwärmen direkt (d.h. gezielt) an der Öffnungsrandfläche und/oder der Deckelrandfläche. Dies geschieht so, dass mindestens 50%, bevorzugt mindestens 75%, weiter bevorzugt mindestens 90%, der durch das induktive Erwärmen eingebrachten Wärmeenergie in einer Oberflächenschicht unter der Öffnungsrandfläche bzw. der Deckelrandfläche erzeugt werden. Die Dicke dieser Oberflächenschicht - gemessen von der Öffnungsrandfläche bzw. der Deckelrandfläche aus - ist bevorzugt kleiner als 0,5 mm, weiter bevorzugt kleiner als 0,1 mm. In den Figuren Fig. 5A, Fig. 5B und Fig. 6 sind beispielhafte Ausführungsformen dargestellt, mittels derer dies realisiert werden kann.

In Fig. 5A und Fig. 5B ist jeweils eine Anordnung eines Induktionsheizelements 28, durch welche die Öffnungsrandfläche 26 gezielt induktiv erwärmt werden kann, dargestellt. In beiden Fällen ragt das Induktionsheizelement 28 zumindest teilweise in die Öffnung des Ventilkörpers 14 bzw. den Hohlraum 18 des Ventilkopfes 16 hinein. Das Induktionsheizelement 28 umfasst eine Spule, von der symbolisch jeweils einige Windungen gezeichnet sind. Weitere Bestandteile der Induktionsheizung, etwa Stromzufuhr und Stromversorgung, bzw. des Induktionsheizelements, etwa ein Magnetkern, sind nicht dargestellt.

In Fig. 5A ist die Spule beim induktiven Erwärmen so angeordnet, dass eine Spulenachse, um welche die Windungen verlaufen, in radialer Richtung (in Bezug auf die Ventilachse) verläuft, d.h. senkrecht zur Ventilachse und senkrecht zur Umfangrichtung, so dass die Spulenachse senkrecht zur Umfangrichtung der Öffnungsrandfläche 26 ist. Spulenenden der Spule (die in den Hohlraum zumindest teilweise hineinragt, d.h. zumindest teilweise im Hohlraum angeordnet ist) des Induktionsheizelements 28 befinden sich in der Nähe der Öffnungsrandfläche 26, so dass dort eine möglichst hohe Feldstärke erreicht wird. Um die induktive Wärmeenergie gleichmäßig über den Umfang zu verteilen, ist ein durch einen Pfeil angedeutetes Rotieren von Ventilkörper 14 und Heizelement 28 relativ zueinander vorgesehen. Der Durchmesser der Spule wird an die axiale Höhe (d.h. die Höhe in Richtung der Ventilachse) der Öffnungsrandfläche 26 angepasst. Selbstverständlich ist hier auch die Verwendung mehrerer über den Umfang verteilter Induktionsheizelemente (Spulen) möglich. In Fig. 5B ist die Spule beim induktiven Erwärmen so angeordnet, dass die Spulenachse in Richtung der Ventilachse verläuft und bevorzugt mit dieser zusammenfällt, wobei ein Spulenende im Hohlraum 8 gelegen ist. Insbesondere der Durchmesser der Spule ist hier an einen Durchmesser der Öffnung angepasst, so dass die Öffnungsrandfläche 26 effektiv erwärmt werden kann. Weiterhin (nicht dargestellt) kann das Induktionsheizelement beim induktiven Erwärmen so angeordnet werden, dass die Spulenachse senkrecht zur Öffnungsrandfläche 26 steht, die Spulenachse verläuft dann also im Allgemeinen schräg zur Ventilachse. Dies ist besonders vorteilhaft im Falle einer konischen Öffnungsrandfläche 26. Der Durchmesser der Spule wird an die Breite (orthogonal zur Umfangrichtung) der Öffnungsrandfläche 26 angepasst. Das Induktionsheizelement wird auch in dieser Ausführungsform beim induktiven Erwärmen so angeordnet, dass es zumindest teilweise in den Hohlraum 8 hineinragt und dass ein Ende einer Spule des Induktionsheizelements in der Nähe der Öffnungsrandfläche liegt, wobei wieder ein Rotieren von Ventilkörper und Induktionsheizelement relativ zueinander vorgesehen ist (und offensichtlich wieder mehrere Induktionsheizelemente verwendet werden können).

In Fig. 6 ist das gezielte induktive Erwärmen der Deckelrandfläche 24 dargestellt. Hier sind beispielhaft zwei (auch eine andere Anzahl ist möglich) Induktionsheizelemente 28 dargestellt, die jeweils eine Spule umfassen. Die Spulenachsen werden beim induktiven Erwärmen so angeordnet, dass sie senkrecht zu der Deckelrandfläche 24 stehen, die hier beispielsweise konisch ist, wobei jeweils ein Spulenende in der Nähe der Deckelrandfläche 24 zu liegen kommt. Der Durchmesser der Spulen wird an die Breite (orthogonal zur Umfangrichtung) der Deckelrandfläche 24 angepasst. Es ist vorgesehen, wie durch einen Pfeil angedeutet, Ventildeckel 12 und Induktionsheizelement(e) 28 relativ zueinander zu rotieren.

Bezugszeichenliste

2       Ventildeckel (Stand der Technik)
4       Ventilkörper (Stand der Technik)
6       Schweißwulst (Stand der Technik)
8       Hohlraum (Stand der Technik)
10      Bohrung (Stand der Technik)
12      Ventildeckel
14      Ventilkörper

16 Ventilkopf
18 Hohlraum im Ventilkopf
20 Ventilstamm
22 Ventilstamm-Hohlraum
24 Deckelrandfläche
26 Öffnungsrandfläche
28 Induktionsheizelement
30 Ventilbodenfläche
40 Bewegen des Deckelelements
42 Rotieren des Deckelelements
44 Drücken des Deckelelements
46 Drücken des Deckelelements

**Patentansprüche**

1. Verfahren zur Herstellung eines Hohlraumventils umfassend

   Bereitstellen eines Ventilkörpers (14), der einen Hohlraum (18) aufweist, wobei der Ventilkörper (14) an einer Bodenseite eine kreisförmige Öffnung mit einer Öffnungsrandfläche (26) aufweist;
   Bereitstellen eines kreisförmigen Ventildeckels (12) mit einer Deckelrandfläche (24); Verschweißen des Ventilkörpers (14) mit dem Ventildeckel (12) durch Reibschweißen der Öffnungsrandfläche (26) mit der Deckelrandfläche (24); **gekennzeichnet durch** Induktives Erwärmen der Öffnungsrandfläche (26) und der Deckelrandfläche (24) vor dem Verschweißen des Ventilkörpers (14) mit dem Ventildeckel (12).

2. Verfahren nach einem der vorstehenden Ansprüche, wobei das induktive Erwärmen von Öffnungsrandfläche (26) und Deckelrandfläche (24) bis auf eine Temperatur oberhalb der Rekristallisationstemperatur eines Materials von Ventilkörper (14) bzw. Ventildeckel (12) erfolgt.

3. Verfahren nach einem der vorstehenden Ansprüche, weiterhin umfassend induktives Zuführen von Energie mittels einer Induktionsheizung nach dem Schritt des Verschweißens, um eine Abkühlgeschwindigkeit zu steuern.

4. Verfahren nach einem der vorstehenden Ansprüche, weiterhin umfassend Nachbearbeiten einer Ventilbodenfläche (30) des verschweißten Hohlraumventils.

5. Verfahren nach einem der vorstehenden Ansprüche, umfassend

   Bewegen von Ventilkörper (14) und Ventildeckel (12) aufeinander zu, nach und/oder während dem induktiven Erwärmen, bis die Öffnungsrandfläche (26) und die Deckelrandfläche (24) in Kontakt stehen;
   Drehen des Ventilkörpers (14) und des Ventildeckels (12) relativ zueinander für einen vorbestimmten Reibschweiß-Zeitraum, wobei Öffnungsrandfläche (26) und Deckelrandfläche (24) mit einem ersten Druck aneinander gepresst werden; und Aneinanderpressen der Öffnungsrandfläche (26) und der Deckelrandfläche (24) mit einem zweiten Druck nach Beenden des Drehens für einen vorbestimmten Kühl-Zeitraum.

6. Verfahren nach einem der vorstehenden Ansprüche, wobei das Verschweißen unter einem Schutzgas erfolgt.

7. Verfahren nach einem der vorstehenden Ansprüche, weiterhin umfassend Rotieren des Ventilkörpers (14) bzw. des Ventildeckels (12) relativ zu einem Induktionsheizelement (28) während des induktiven Erwärmens.

8. Verfahren nach einem der vorstehenden Ansprüche, wobei das induktive Erwärmen mittels einer Induktionsheizung erfolgt, deren Frequenz mindestens 10 kHz beträgt.

9. Verfahren nach einem der vorstehenden Ansprüche, wobei das induktive Erwärmen direkt an der Öffnungsrandfläche (26) und/oder der Deckelrandfläche (24) erfolgt, wobei mindestens 50% der jeweiligen Wärmeenergie in einer Oberflächenschicht unter der Öffnungsrandfläche (26) bzw. der Deckelrandfläche (24) erzeugt wird.

10. Verfahren nach Anspruch 9, wobei die Oberflächenschicht unter der Öffnungsrandfläche (26) bzw. der Deckelrandfläche (24) eine Dicke kleiner als 0,5 mm aufweist.

11. Verfahren nach einem der vorstehenden Ansprüche, umfassend induktives Erwärmen der Öffnungsrandfläche (26), wobei das induktive Aufheizen mittels eines Induktionsheizelements (28) erfolgt, das in den Hohlraum (18) hineinragt.

12. Verfahren nach einem der vorstehenden Ansprüche, weiterhin umfassend Einfüllen eines Kühlmediums in den Hohlraum (18) oder einen Ventilstammhohlraum (22) vor dem Verschweißen.

13. Verfahren nach einem der vorstehenden Ansprüche, wobei Ventilkörper (14) und Ventildeckel (12) aus unterschiedlichen Materialien bestehen.

**Claims**

1. Method for producing a cavity valve comprising

   providing a valve body (14) which has a cavity (18), wherein the valve body (14) has a circular opening having an opening edge surface (26) on a bottom side;
   providing a circular valve cover (12) with a cover edge surface (24);
   welding the valve body (14) to the valve cover (12) by friction welding of the opening edge surface (26) to the cover edge surface (24); **characterized by**
   inductive heating of the opening edge surface (26) and the cover edge surface (24) before the welding of the valve body (14) to the valve cover (12).

2. Method according to one of the preceding claims, wherein the inductive heating of opening edge surface (26) and cover edge surface (24) is carried out up to a temperature above the recrystallization temperature of a material of valve body (14) or valve cover (12).

3. Method according to one of the preceding claims, further comprising inductive supply of energy by means of an induction heater after the step of the welding in order to control a cooling speed.

4. Method according to one of the preceding claims, further comprising reworking a valve tray surface (30) of the welded cavity valve.

5. Method according to one of the preceding claims, comprising

   moving valve body (14) and valve cover (12) towards one another after and / or during the inductive heating until the opening edge surface (26) and the cover edge surface (24) are in contact;
   turning the valve body (14) and the valve cover (12) relative to one another for a predetermined friction welding time interval, wherein opening edge surface (26) and cover edge surface (24) are pressed against one another with a first pressure; and
   pressing the opening edge surface (26) and the cover edge surface (24) against one another with a second pressure after completing the turning for a predetermined cooling period.

6. Method according to one of the preceding claims, wherein the welding takes place under a protective gas.

7. Method according to one of the preceding claims, further comprising rotating the valve body (14) or the valve cover (12) relative to an induction heating element (28) during the inductive heating.

8. Method according to one of the preceding claims, wherein the inductive heating takes place by means of an induction heater whose frequency is at least 10 kHz.

9. Method according to one of the preceding claims, wherein the inductive heating takes place directly at the opening edge surface (26) and / or the cover edge surface (24), wherein at least 50 % of the respective heat energy is produced in a surface layer under the opening edge surface (26) or the cover edge surface (24).

10. Method according to claim 9, wherein the surface layer under the opening edge surface (26) or the cover edge surface (24) has a thickness less than 0.5 mm.

11. Method according to one of the preceding claims, comprising inductive heating of the opening edge surface (26), wherein the inductive heating is carried out by means of an induction heating element (28) which extends into the cavity (18).

12. Method according to one of the preceding claims, further comprising filling a cooling medium into the cavity (18) or a valve stem cavity (22) before the welding.

13. Method according to one of the preceding claims, wherein valve body (14) and valve cover (12) consist of different materials.

**Revendications**

1. Procédé de fabrication d'une valve à cavité comprenant :

   la fourniture d'un corps de valve (14), qui présente une cavité (18), dans lequel le corps de valve (14) présente sur un côté inférieur une ouverture circulaire avec une surface de bord d'ouverture (26) ;
   la fourniture d'un couvercle de valve circulaire (12) avec une surface de bord de couvercle (24) ; le soudage du corps de valve (14) au couvercle de valve (12) par soudage par friction de la surface de bord d'ouverture (26) à la surface de bord de couvercle (24) ; **caractérisé par** un chauffage par induction de la surface de bord d'ouverture (26) et de la surface de bord de couvercle (24) avant que le corps de valve (14) ne soit soudé au couvercle de valve (12).

2. Procédé selon une quelconque des revendications précédentes, dans lequel le chauffage par induction de la surface de bord d'ouverture (26) et la surface de bord de couvercle (24) a lieu jusqu'à une température supérieure à la température de recristallisation d'un matériau du corps de valve (14) ou du couvercle de valve (12).

3. Procédé selon une quelconque des revendications précédentes, comprenant en outre la fourniture d'énergie au moyen d'un chauffage par induction après l'étape de soudage pour commander une vitesse de refroidissement.

4. Procédé selon une quelconque des revendications précédentes, comprenant en outre l'usinage de finition d'une surface de fond de valve (30) de la cavité de valve soudée.

5. Procédé selon une quelconque des revendications précédentes, comprenant :

le déplacement du corps de valve (14) et du couvercle de valve (12) l'un vers l'autre, après et/ou pendant le chauffage inductif, jusqu'à ce que la surface de bord d'ouverture (26) et la surface du bord du couvercle (24) soient en contact ;
la rotation corps de valve (14) et du couvercle de valve (12) l'un par rapport à l'autre pendant une période de soudage par friction prédéterminée, dans lequel la surface de bord d'ouverture (26) et la surface de bord de couvercle (24) sont pressées l'une contre l'autre avec une première pression ; et
la surface de bord d'ouverture (26) et la surface de bord de couvercle (24) sont pressées l'une contre l'autre avec une seconde pression après la fin de la rotation pendant une période de refroidissement prédéterminée.

6. Procédé selon une quelconque des revendications précédentes, dans lequel le soudage est effectué sous gaz protecteur.

7. Procédé selon une quelconque des revendications précédentes, comprenant en outre la rotation du corps de valve (14) ou du couvercle de valve (12) par rapport à un élément chauffant par induction (28) pendant le chauffage par induction.

8. Procédé selon une quelconque des revendications précédentes, dans lequel le chauffage par induction est réalisé au moyen d'un chauffage par induction dont la fréquence est d'au moins 10 kHz.

9. Procédé selon une quelconque des revendications précédentes, dans lequel le chauffage par induction a lieu directement sur la surface de bord d'ouverture (26) et/ou la surface de bord de couvercle (24), dans lequel au moins 50 % de l'énergie thermique respective est générée dans une couche superficielle sous la surface de bord d'ouverture (26) ou la surface de bord de couvercle (24).

10. Procédé selon la revendication 9, dans lequel la couche de surface sous la surface de bord d'ouverture (26) ou la surface de bord de couvercle (24) a une épaisseur inférieure à 0,5 mm.

11. Procédé selon une quelconque des revendications précédentes, comprenant le chauffage par induction de la surface de bord d'ouverture (26), dans lequel le chauffage par induction a lieu au moyen d'un élément chauffant par induction (28), qui dépasse en saillie dans la cavité (18).

12. Procédé selon une quelconque des revendications précédentes, comprenant en outre le remplissage d'un milieu de refroidissement dans la cavité (18) ou une cavité de tige de valve (22) avant le soudage.

13. Procédé selon une quelconque des revendications précédentes, dans lequel le corps de valve (14) et le couvercle de valve (12) sont composés de différents matériaux.

Fig. 1 (Stand der Technik)

Fig. 2A    Fig. 2B    Fig. 2C    Fig. 2D

EP 3 793 762 B1

Fig. 3

Fig. 4

Fig. 5A

Fig. 5B

Fig. 6

**IN DER BESCHREIBUNG AUFGEFÜHRTE DOKUMENTE**

**In der Beschreibung aufgeführte Patentdokumente**

- DE 10209770 A1
- DE 102015220891 A1
- EP 1213087 A2
- DE 102007026328 A1
- DE 102008034930 A1